(19) Europäisches Patentamt
European Patent Office
Office européen des brevets

(11) Publication number: 0 337 443 B1

(12) EUROPEAN PATENT SPECIFICATION

(45) Date of publication of patent specification: **16.12.92**

(51) Int. Cl.5: **C08L 77/00**, C08K 3/34, C08K 3/22, C08K 7/14, B60R 1/02

(21) Application number: **89106551.8**

(22) Date of filing: **13.04.89**

# (54) Polyamide resin molding composition.

(30) Priority: **15.04.88 JP 91611/88**
**25.07.88 JP 183554/88**

(43) Date of publication of application:
**18.10.89 Bulletin 89/42**

(45) Publication of the grant of the patent:
**16.12.92 Bulletin 92/51**

(84) Designated Contracting States:
**DE FR GB IT**

(56) References cited:
**US-A- 3 968 071**

**PATENT ABSTRACTS OF JAPAN, vol. 6, no. 177 (C-124)[1055], 11th September 1982; & JP-A-57 92 049 (ASAHI KASEI KOGYO K.K.) 08-06-1982**

**PATENT ABSTRACTS OF JAPAN, vol. 9, no. 21 (C-263)[1744], 29th January 1985; & JP-A-59 168 058 (ASAHI KASEI KOGYO K.K.) 21-09-1984**

(73) Proprietor: **MITSUBISHI GAS CHEMICAL COMPANY, INC.**
**5-2, Marunouchi 2-chome Chiyoda-Ku**
**Tokyo, 100(JP)**

(72) Inventor: **Nomura, Isao**
**1001-9, Nakahara Shimojuku**
**Hiratsuka-shi Kanagawa-ken(JP)**
Inventor: **Morishige, Kiyoshi**
**480-6, Nagamochi**
**Hiratsuka-shi Kanagawa-ken(JP)**
Inventor: **Yamamiya, Kazuo**
**3-7-16, Simomachiya**
**Chigasaki-shi Kanagawa-ken(JP)**
Inventor: **Watanabe, Noriyoshi**
**2-8-8, Nishiyawata**
**Hiratsuka-shi Kanagawa-ken(JP)**

(74) Representative: **Kraus, Walter, Dr. et al**
**Patentanwälte Kraus, Weisert & Partner**
**Thomas-Wimmer-Ring 15**
**W-8000 München 22(DE)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

EP 0 337 443 B1

## Description

This invention relates to a polyamide resin molding composition. More specifically, it relates to a polyamide resin molding composition having excellent dimensional stability, mechanical properties, moldability, antivibration property and coatability.

Polyamide, or "MX nylon" for short, obtained from xylylenediamine and alpha,omega-straight-chain aliphatic dibasic acid has a low water absorption and changes little in dimension, mechanical properties and thermal properties even at the time of absorbing water.

A composition comprising MX-nylon and glass fibers generally has better chemical, mechanical and thermal properties than compositions comprising general-purpose polyamides such as nylon 6 and nylon 66, and by utilizing these characteristics, MX nylon has been widely used as a molding material for electrical and electronic component parts, machine parts, precision device parts and automobile parts.

For example, U. S. Patent 3,968,071 describes that addition of glass fibers to MX nylon can improve the strength and rigidity of MX nylon. It also describes that a coloring agent, an antioxidant, an ultraviolet absorber, an antistatic agent and a flame retardant are incorporated as other inorganic fillers. However, this U. S. Patent quite fails to give a description on the improvement of the antivibration characteristics and coatability of MX nylon.

Japanese Patent Publication No. 23308/1980 discloses a resin composition comprising MX nylon and instead of glass fibers, powdery inorganic fillers such as talc, silica, kaolinite, calcium carbonate, graphite, mica, iron oxide, carbon black and titanium oxide having rigidity and strength comparable to those of the resin composition comprising MX nylon and glass fibers. This patent document, however, is quite silent on the improvement of the antivibration property and coatability of MX nylon.

Automobile articles having a relatively large weight, such as an automobile door mirror stay and an antidazzling automobile room mirror stay are generally required to have not only antivibration property but also mechanical properties (strength and rigidity, etc.), coatability, surface smoothness and dimensional stability.

Metallic materials such as zinc have previously been used as materials for automobile articles which satisfy these properties. The metallic materials have excellent antivibration property, but have the defect that a surface-treating process before coating is complex, and the weight is large. It has been desired to develope plastic automobile door mirror stays and room mirror stays of light weight with excellent moldability.

Attempts have previously been made to produce antivibrating automobile parts from synthetic resins such as PET and PBT, but have not yet resulted in satisfactory products that can be put to practical use. Because PET, PBT and general-purpose polyamides (such as nylon 6 and nylon 66) have lower flowability than MX nylon, it is difficult to incorporate large amounts of inorganic fillers such as glass fibers and mica in the resins, and mold the resulting resin compositions. Excellent antivibration property and rigidity are difficult to impart to these resin compositions. Furthermore, PET and PBT have the defect that they have poor coatability and adhesion and a large mold shrinkage that is liable to induce warpage. In addition, the nylon 6 and nylon 66 greatly change in dimension upon water absorption, and greatly decrease in strength and rigidity upon water absorption. Moreover, in a dry state, general-purpose polyamides have lower rigidity and strength than MX nylon, and molded products therefrom have an unsatisfactory surface appearance.

When MX nylon is to be used as a molded article for a machine component part, it is usually injection-molded and the resulting article is directly used. In applications which require good surface appearance, the molded article is coated. Since MX nylon is a crystalline resin having a high polarity, it has a large self-cohesive force and has poor adhesion to resins generally used for painting.

In order to increase the adhesion of a polyamide resin to a paint resin, the molded polyamide article is pretreated, for example, by a method which comprises immersing it in a 40 % aqueous solution of phosphoric acid, washing it with water and drying it, a method which comprises degreasing the surface of the molded article with isopropyl alcohol or the like, or a method which comprises applying a primer to the surface of the molded article. All of these methods, however, are complex in treating operations and increase the treating cost. It is desired to provide an improvement whereby an injection-molded article of MX nylon can be directly coated.

It is an object of this invention to provide a polyamide resin molding composition having excellent antivibration property, mechanical properties (strength, rid idity, etc.), surface smoothness and dimensional stability.

Other objects of this invention along with its advantages will become apparent from the following description.

The present invention provides

(1) a polyamide resin molding composition having excellent antivibration properties comprising a polyamide obtained from xylylenediamine and an alpha,omega-straight-chain aliphatic dibasic acid, mica having an average particle diameter of not more than 200 micrometers and glass fibers, the proportion of mica being 20 to 55% by weight, the proportion of the glass fibers being at least 15% by weight, such that the total proportion of the mica and glass fibers being up to 70% by weight; and

(2) a polyamide resin molding composition having excellent antivibration properties comprising a mixture of 40 to 99% by weight of a polyamide obtained from xylylenediamine and an alpha,omega-straight-chain aliphatic dibasic acid and 60 and 1% by weight of nylon 66, the total amount of the two polyamides being 100% by weight of the mixture, mica having an average particle diameter of not more than 200 micrometers and glass fibers, the proportion of mica being 20 to 55% by weight, the proportion of the glass fibers being at least 15% by weight, such that the total proportion of the mica and glass fibers being up to 70% by weight.

The MX nylon used in this invention which is derived from xylylenediamine and an alpha,omega-straight-chain aliphatic dibasic acid is synthesized by polycondensation between meta-xylylenediamine alone or a mixture of at least 60% by weight of m-xylylenediamine and not more than 40% by weight of p-xylylenediamine, and an alpha,omega-straight-chain aliphatic dibasic acid having 6 to 20 carbon atoms such as adipic acid, sebacic acid, suberic acid, 1,10-decanedicarboxylic acid or 1,18-octadecanedicarboxylic acid.

Adipic acid is especially preferred as the alpha,omega-straight-chain aliphatic dibasic acid in view of the balance between moldability of the resin and the properties of the molded product.

If MX nylon is used with nylon 66, the moldability of the MX nylon can be improved, and the molding cycle time can be shortened. In this case, 60 to 1% by weight of nylon 66 is used with 40 to 99% by weight of MX nylon, preferably 40 to 3 % by weight of nylon 66 is used with 60 to 97 % by weight of MX nylon. The total proportions of the two polyamides is 100 % by weight. If the proportion of MX nylon is less than 40 % by weight based on the total weight of the polyamides, the resulting composition has reduced mechanical strength and decreases in properties upon water absorption. If the proportion of nylon 66 is less than 1 % by weight based on the total weight of the mixture of MX nylon and nylon 66, the effect of improving the moldability of MX nylon is small.

Incorporation of mica in MX nylon, or a mixture of it with nylon 66 (may be referred to as MX-nylon-containing polyamide) very much improves the antivibration property, rigidity, warping characteristics and surface smoothness of an article molded from it.

It has been known that by incorporating mica in a resin composition some degree of antivibration effect can be obtained. Generally, however, if a high proportion of mica is incorporated in a general-purpose resin molding composition, it is difficult to knead it with the resin. The resulting composition cannot be molded or a molded product has a degraded appearance. For example, when 100 parts by weight of nylon 66 is blended with 25 parts of glass fibers and mica is further incorporated in an amount of at least 20 parts by weight, a molded article from the resulting composition has a degraded appearance, and is not practicable.

According to this invention, even a high proportion of mica can be kneaded with MX nylon, and the resulting composition can be molded to provide an article having an excellent appearance. This is presumably due to the excellent flowability of the MX nylon resin.

MX nylon has better rigidity, warping properties and surface smoothness than other general-purpose engineering plastics. These properties can be greatly improved because mica can be incorporated in a high proportion. For use as an automobile mirror stay, the balance of properties required such as antivibration property is very important. When the resin composition has only one excellent property but another poor property, it becomes useless. The resin composition of this invention satisfies any of the required properties.

The mica used in this invention may include muscovite, phlogopite and biotite, but is not particularly limited thereto. It has an average particle diameter of not more than 200 micrometers. When the average particle diameter of mica is not more than 200 micrometers, a molded article having excellent surface smoothness can be obtained.

In the present invention, the proportion of mica incorporated is 20 to 55 % by weight, preferably 25 to 45 % by weight in the polyamide resin molding composition. If the proportion of mica is less than 20 % by weight of the molding composition, the contribution of mica to rigidity, warping property and antivibration property is small. If, on the other hand, the proportion of the mica is larger than 55 % by weight, a problem may arise in molding.

The mica may be used in a bulk form by using a resin binder. If mica having an average particle diameter of not more than 200 micrometers is used in bulk form by using a resin binder, the coatability of the molded article can be improved by the resin binder used.

The bulk form in this case includes the form of pellets, spheres, etc. There is no particular limitation on the size of the bulk, but it desirably has a particle diameter of 1 to 5 mm. When a mica powder of a small average particle diameter is fed from the hopper of a molding machine, a uniform resin composition is difficult to obtain. A more uniform resin composition could be obtained if mica is supplied in a bulk form.

Examples of the resin binder used to maintain mica in a bulk form are acrylic resins, vinyl acetate resin, styrene resin, epoxy resin, polyvinyl alcohol and urethane resins. The proportion of the resin binder used is preferably 0.01 to 10 parts by weight per 100 parts by weight of the mica. If the amount of the resin binder used is too small based on the mica powder, the bulky mica tends to be disintegrable. If, on the other hand, the proportion of the resin binder is too large based on the mica, the dispersibility of the mica is impaired when it is kneaded with the resin. Furthermore, to improve dispersibility, the mica may be surface-treated with a surface-treating agent such as a silane coupling agent or a titanate coupling agent before it is rendered in a bulk form.

To improve chemical, thermal and mechanical properties, glass fibers are incorporated in the resin composition of this invention.

The proportion of the glass fibers incorporated is at least 15 % by weight, preferably 20 to 40 % by weight, per 100 % by weight of the polyamide resin molding composition. If the amount of the glass fibers is less than 15 % by weight, it is difficult to obtain an effect of improving mechanical strength and thermal properties. If it is above 55 %, moldability, warping properties and surface smoothness are undesirably impaired.

Glass fibers commercially available for fiber reinforcement may be used in this invention.

The total amount of mica and glass fibers is up 70 % by weight. If it is less than 30 % by weight, the desired mechanical properties and antivibration property cannot be obtained. If it exceeds 70 % by weight, inconvenience is caused to the molding.

In addition to mica and glass fibers, one or more inorganic fillers such as calcium carbonate, talc, wollastonite, potassium titanate, silicon carbide whiskers, carbon fibers, alumina-silica ceramic fibers, barium stearate, carbon black and zinc oxide may be incorporated in the polyamide composition of this invention in amounts which do not impair the object of this invention.

When molded articles prepared from the resin composition of this invention are used externally, they are generally coated. To coat the molded article, the coatability of the molded article should be improved in order to improve the adhesion of the MX nylon-containing polyamide resin to a paint resin.

The coatability of the polyamide resin composition of this invention may be improved by incorporating a crystalline random copolymer composed of ethylene and vinyl alcohol and having the following basic molecular structure

$$-(CH_2-CH_2)_{\ell}-(CH_2-\underset{OH}{\underset{|}{C}}H)_m$$

wherein $\ell$ and m are the degrees of polymerization.

The above ethylene/vinyl alcohol random copolymer has the OH group and is therefore well compatible with the polyamide and with a paint. Hence, it improves coatability of the molded articles. The desirable proportion of the ethylene groups in the crystalline random copolymer is 20 to 50 mole %. If it is less than 20 mole %, the thermal resistance of the composition is reduced. If it is above 50 mole %, the effect of improving the adhesion of the coated film is reduced.

The proportion of the ethylene/vinyl alcohol random copolymer is 0.5 to 10 % by weight. If the proportion of random copolymer is less than 0.5 part by weight, there is no sufficient effect of improving their adhesion of the coated film. If it exceeds 10 % by weight, moldability, thermal resistance, mechanical strength and rigidity will be undesirably impaired.

Other additives such as stabilizers against oxidative, thermal and ultraviolet degradation, nucleating agents, plasticizers, mold releasing agents, antistatic agent, pigment, and lubricants normally used for general polyamide resin compositions may be incorporated in usually amounts in the polyamide resin compositions of this invention.

The polyamide resin composition of this invention may be generally produced by melt-mixing the ingredients by an extruder at a temperature 5 to 50 °C higher than the melting point or flow initiation temperature of the polyiamide resin used.

When an automobile door mirror stay and an automobile room mirror stay are molded from the polyamide resin molding composition of this invention, they satisfy the various properties required of these

automobile parts, antivibration property, mechanical properties (strength, rigidity, etc.), surface smoothness and dimensional stability.

The polyamide resin composition containing mica in accordance with this invention may be molded into anti-vibratory parts of accoustic devices such as a compact disc player or a laser disc player, such as chassis, disc trays and legs.

The following Examples and Comparative Example specifically illustrate the present invention. The various properties were measured by the following methods.

(1) Mechanical properties

Tensile strength: ASTM D638
Tensile elongation: ASTM D638
Flexural strength: ASTM D790
Flexural modulus: ASTM D790

(2) Antivibration property

One end of a test specimen having a width of 12 mm, a thickness of 3 mm and a length of 215 mm was fixed and suspended perpendicularly, and a weight of 500 g was attached to the other end. A a strain gauge (model KFC-2-CI-IIL30, made by Kyowa Dengyo Co., Ltd.) was set at a site 60 mm away from the fixed end of the test specimen. The weight suspended from the test specimen was pulled by hand to create vibration in the test specimen perpendicularly to its surface. The vibration changes were measured by the strain gauge.

The logarithmic damping rate ($\delta$) and specific damping coefficient [S.D.C (%)] were calculated by the following equations.

$\delta = l/n \ \ell n(A_o/A_n)$
S.D.C = $(l\text{-}e^{-2\delta}) \times 100$

wherein n is the number of vibrations measured, $A_o$ is the initial amplitude, and $A_n$ is the amplitude of the nth vibration.

(3) Coatability

A paint was coated on the sample to a predetermined thickness, and then cured at 80 °C for 30 minutes. Eleven cuts each having a width of 1 mm were provided lengthwise and crosswise to provide 100 squares (1 mm x 1 mm).

A cellophane adhesive tape (Cellotape CT-18, a product of Nichiban Co., Ltd.) was applied to the squares and stripped off. The number of remaining squares was counted (crosscut test).

This crosscut test was in accordance with JIS K5400.

The crosscut test was also carried out on the sample which after the above curing treatment was immersed for 10 days in warm water at 40 °C.

(4) Warping property

A square test specimen, 90 mm long, 90 mm wide and 1.5 mm thick, was molded from the resin composition. The degree of planarity was carried out by using a three-dimensional measuring instrument (Microcord A-121 (made by Mitsutoyo Manufacturing Co., Ltd.)

After the molding, the molded specimen was rapidly cooled, and its planarity was measured at 23 °C and 50 % RH. The central part of the test specimen was fixed, and the coordinates of the four corners of the test specimen were determined by the three-dimensional measuring instrument. A plane obtained by the method of least square from the coordinates of the four points was made a standard, and deviation from this plane was determined on each point. The range of deviation (R = max - min.) was defined as the degree of planarity. The degree of planarity is defined by JIS B0621.

(5) Surface smoothness

Evaluated visually.

○ : good (the surface was beautiful, smooth and shining)
△ : slighty good (the surface was slightly rough and has some raisings and depressions)

EXAMPLE 1

One hundred by weight of poly(m-xylylene adipamide) (nylon MXD6 for short; produced by Mitsubishi Gas Chemical; relative viscosity 2.14), 50 parts by weight of pellets of nylon 66 (relative viscosity 2.25), 125 parts of chopped strands of glass fibers having a length of 3 mm (CS03 JAFT-2 produced by Asahi Fiberglass Co. Ltd.) and 200 parts by weight of mica powder having an average particle diameter of 90 micrometers (B-82 made by Yamaguchi Mica Co., Ltd.) were mixed in a tumbler, melt-kneaded at 280 °C by a vent-type extruder, and then extruded into the form of a strand. The extrudate was cooled over a water bath, cut and dried to produce a molding material in the form of pellets.

The molding material was then injection-molded at a mold temperature of 130 °C to produce an article having a length of 70 mm, a width of 70 mm and a thickness of 6 mm. An acrylic urethane resin (Origin Plate Z made by Origin Electrical Co., Ltd.) was coated on the article to a film thickness of 50 micrometers, and its coatability was tested.

The other properties of the molded articles were measured, and the results are shown in Table 1.

EXAMPLE 2

The same ingredients (except nylon 66) as used in Example 1 were mixed in the proportions shown in Table 1, and molded as in Example 1. In the coatability test, a urethane resin (RETHANE PG60 No. 101, produced by Kansai Paint Co., Ltd.) was used.

The properties of the molded article are shown in Table 1.

EXAMPLE 3

The same nylon MXD6 as used in Example 1, the same nylon 66 as used in Example 1, the same chopped strands of glass fibers as used in Example 1, the same mica powder as used in Example 1 and an ethylene/vinyl alcohol random copolymer (Eval®, EP-F101, a product of Kuraray Inc.; ethylene group content 32 mole %) were mixed in the amounts indicated in Table 1. The mixture was molded and the molded article was tested as in Example 2. The results are shown in Table 1.

COMPARATIVE EXAMPLE 1

The same components as used in Example 1 excepting mica were mixed and molded as in Example 1. The molded article was tested as in Example 2.

The results are shown in Table 1.

Table 1

| | Example 1 | Example 2 | Example 3 | Comparative Example 1 |
|---|---|---|---|---|
| Resin composition (parts by weight) | | | | |
| Nylon MXD6 | 100 | 100 | 100 | 100 |
| Nylon 66 | 50 | 0 | 10 | 50 |
| Ethylene/vinyl alcohol random copolymer | - | - | 5 | - |
| Mica | 200 | 50 | 40 | - |
| Glass fibers | 125 | 50 | 50 | 125 |
| (1) Mechanical properties | | | | |
| Tensile strength ($kg/cm^2$) | 1550 | 1900 | 1500 | 2100 |
| Tensile elongation (%) | 0.65 | 1.0 | 0.8 | 1.95 |
| Flexural strength ($kg/cm^2$) | 2350 | 2500 | 2200 | 2900 |
| Flexural modulus ($10^3$ $kg/cm^2$) | 215 | 210 | 195 | 160 |
| (2) Antivibration property | | | | |
| Logarithmic damping rate ($\delta$) | 0.07 | 0.07 | 0.065 | 0.04 |
| Specific damping coefficient (S.D.C) (%) | 13.1 | 13.1 | 12.2 | 7.7 |
| (3) Coatability | | | | |
| before immersion in warm water | 97 | 100 | 100 | 80 |
| after immersion in warm water | 92 | 94 | 100 | 60 |
| (4) Warping property, planarity (mm) | 0.08 | 0.07 | 0.08 | 0.20 |
| (5) Surface smoothness | ○ | ○ | ○ | △ |

## Claims

1. A polyamide resin molding composition having excellent antivibration properties comprising a polyamide resin obtained from xylylenediamine and an alpha,omega-straight-chain aliphatic dibasic acid, mica having an average particle diameter of not more than 200 micrometers and glass fibers, the proportion of mica being 20 to 55% by weight, the proportion of the glass fibers being at least 15% by weight, such that the total proportion of the mica and glass fibers being up to 70% by weight.

2. A polyamide resin molding composition having excellent antivibration properties comprising a mixture of 40 to 99% by weight of a polyamide obtained from xylylenediamine and an alpha,omega-straight-chain aliphatic dibasic acid and 60 to 1% by weight of nylon 66, the total amount of the two polyamides being 100% by weight of the mixture, mica having an average particle diameter of not more than 200 micrometers and glass fibers, the proportion of mica being 20 to 55% by weight, the proportion of the glass fibers being at least 15% by weight, such that the total proportion of the mica and glass fibers being up to 70% by weight.

**3.** The polyamide resin molding composition of claim 1 or 2 in which the mica is rendered in a bulk form by using a resin binder.

**4.** An automobile mirror stay obtained by molding the polyamide resin molding composition of any one of claims 1, 2 and 3.

**Patentansprüche**

**1.** Polyamidharz-Formmasse mit ausgezeichneten Antivibrations-Eigenschaften, dadurch **gekennzeichnet,** daß sie ein Polyamidharz, erhalten aus Xylylendiamin und einer geradkettigen aliphatischen alpha,omega-2-basischen Säure, Glimmer eines durchschnittlichen Teilchendurchmessers von nicht mehr als 200 µm und Glasfasern enthält, wobei der Anteil des Glimmers 20 bis 55 Gew.-% beträgt, der Anteil der Glasfasern mindestens 15 Gew.-% beträgt, so daß der Gesamtanteil des Glimmers und der Glasfasern bis zu 70 Gew.-% beträgt.

**2.** Polyamidharz-Formmasse mit ausgezeichneten Antivibrations-Eigenschaften, dadurch **gekennzeichnet,** daß sie ein Gemisch aus 40 bis 99 Gew.-% eines Polyamids, erhalten aus Xylylendiamin und einer geradkettigen aliphatischen alpha,omega-2-basischen Säure und 60 bis 1 Gew.-% Nylon 66, wobei die Gesamtmenge der zwei Polyamide 100 Gew.-% des Gemisches beträgt, Glimmer eines durchschnittlichen Teilchendurchmessers von nicht mehr als 200 µm und Glasfasern enthält, wobei der Anteil an Glimmer 20 bis 55 Gew.-%, der Anteil der Glasfasern mindestens 15 Gew.-% beträgt, so daß der Gesamtanteil des Glimmers und der Glasfasern bis zu 70 Gew.-% beträgt.

**3.** Polyamidharz-Formmasse nach Anspruch 1 oder 2, dadurch **gekennzeichnet,** daß der Glimmer durch die Verwendung eines Harzbindemittels in eine Schüttform übergeführt wird.

**4.** Automobilspiegelhalter, erhalten durch Formen der Polyamidharz-Formmasse nach einem der Ansprüche 1, 2 und 3.

**Revendications**

**1.** Composition de résine polyamide à mouler ayant d'excellentes propriétés anti-vibration, comprenant une résine polyamide obtenue à partir de xylylènediamine et d'un alpha,oméga-diacide aliphatique à chaîne droite, du mica ayant un diamètre granulométrique moyen ne dépassant pas 200 micromètres et des fibres de verre, la proportion de mica étant de 20 à 55 % en poids, la proportion des fibres de verre étant d'au moins 15 % en poids, de telle sorte que la proportion totale du mica et des fibres de verre soit d'au plus 70 % en poids.

**2.** Composition de résine polyamide à mouler ayant d'excellentes propriétés anti-vibration comprenant un mélange de 40 à 99 % en poids d'un polyamide obtenu à partir de xylylènediamine et d'un alpha,oméga-diacide aliphatique à chaîne droite et de 60 à 1 % en poids de Nylon 6-6, la quantité totale des deux polyamides constituant 100 % en poids du mélange, du mica ayant un diamètre granulométrique moyen ne dépassant pas 200 micromètres et des fibres de verre, la proportion de mica étant de 20 à 55 % en poids, la proportion des fibres de verre étant d'au moins 15 % en poids, de telle sorte que la proportion totale du mica et des fibres de verre soit d'au plus 70 % en poids.

**3.** Composition de résine polyamide à mouler selon la revendication 1 ou 2, dans laquelle le mica est mis sous une forme agglomérée au moyen d'un liant résineux.

**4.** Support de glace d'automobile, obtenu en moulant la composition de résine polyamide à mouler de l'une quelconque des revendications 1, 2 et 3.